# EUROPEAN PATENT SPECIFICATION

(11) **EP 1 688 293 B1**
(45) Date of publication and mention of the grant of the patent: **15.04.2009**
(21) Application number: 04792423.8
(22) Date of filing: 07.10.2004
(51) Int. Cl.: B60K 17/02, B62M 9/00, F16D 41/08, F16D 43/16, F16D 47/04

(54) **TWO-WHEELED MOTOR VEHICLE AND POWER UNIT**
ZWEIRÄDRIGES KRAFTFAHRZEUG UND ANTRIEBSSYSTEM
VEHICULE A MOTEUR A DEUX ROUES ET BLOC D'ALIMENTATION

(30) Priority: 08.10.2003 JP 2003349059
(43) Date of publication of application: 09.08.2006
(73) Proprietor: HONDA MOTOR CO., LTD., Tokyo 107-8556 (JP)
(72) Inventor: KUROIWA, Yasuyuki c/o HONDA R&D CO., LTD., Saitama (JP); SAWAMURA, Yoshinobu c/o HONDA R&D CO., LTD., Saitama (JP); ABE, Katsuya c/o HONDA R&D CO., LTD., Saitama (JP); KONDO, Hitoshi c/o HONDA R&D CO., LTD., Saitama (JP)
(74) Representative: Rupp, Christian
(86) International application number: PCT/JP2004/015195
(87) International publication number: WO 2005/035292

(56) References cited:
- DE-A1- 3 217 432
- JP-A- 60 263 734
- JP-A- 62 075 141
- JP-A- 2000 190 746
- JP-A- 2001 295 867
- JP-U- 54 042 242
- JP-U- 59 116 639
- JP-U- 61 094 425

## Description

### BACKGROUND OF THE INVENTION

### Field of the Invention

The present invention relates to a motorcycle in which a centrifugal start-up clutch and a torque converter are provided between a crankshaft of an internal combustion engine and a transmission mechanism.

### Background Art

In some internal combustion engines used in such motorcycles according to the preamble of claim 1, a one-way clutch allowing only power transmission from a wheel to a crankshaft is provided as an engine brake on the crankshaft (e.g. see JP-UM-A-59-116639 or JP-A-62-75141).

In a motor vehicle engine according to DE 3217 432 A, it is proposed to use featured mechanisms, which are arranged between guide sleeves of the synchroning devices in order to prevent unwarted engine braking JP2001-295867 A describes a power transmission device constituting a rotation speed deperdent one-way clutch between an engine and pump, wherein the tocque of an input shaft is transmitted to a loading side, when the rotation speed of the engine exceeds a predetermined value.

### SUMMARY OF THE INVENTION

The aforementioned one-way clutch in the background art always operates as a one-way clutch. Therefore, when the one-way clutch is used as an engine brake so as to allow only power transmission from the wheel to the crankshaft, rotations of the wheel will be transmitted to the crankshaft if the wheel rotates even when the internal combustion engine is stopping. For this reason, in order to take (shove) the motorcycle around when the internal combustion engine is stopping, it is necessary to change a gear to a neutral position so as to release the driving force. When the motorcycle has no neutral structure, a new neutral structure has to be built in a gear transmission.

In order to solve the foregoing problem in the background art, the invention provides a motorcycle including: an internal combustion engine having a crankshaft; a transmission mechanism; a centrifugal start-up clutch; and a torque converter, the centrifugal start-up clutch and the torque converter being provided between the crankshaft and the transmission mechanism;
wherein the motorcycle further includes a one-way clutch provided between the crankshaft and the torque converter so that the one-way clutch transmits power from the transmission mechanism to the crankshaft only when a driving force transmitted from a wheel toward the transmission mechanism is larger than a driving force of the internal combustion engine and a rotational speed of the crank shaft is not lower than a predetermined value.

According to the invention, the power is not transmitted from the transmission mechanism side (wheel side) to the crankshaft side when the rotation number of the crankshaft is lower than the predetermined value. Thus, even when the wheel is rotated at a low speed, for example, in order to take the motorcycle around, the rotation of the wheel is not transmitted to the crankshaft. Accordingly, it is not necessary to operate the gear or the like when the motorcycle is taken around. In addition, even when the gear transmission has no neutral mechanism, the motorcycle can be taken around. Thus, it is unnecessary to provide a neutral mechanism, so that the number of parts can be reduced on a large scale. On the other hand, when the accelerator is released during the running of the motorcycle, the rotations of the wheel are transmitted to the crankshaft so that the engine brake can be applied.

### BRIEF DESCRIPTION OF THE DRAWINGS

The present invention may be more readily described with reference to the accompanying drawings:
Fig. 1 is a general side view of a motorcycle according to an embodiment.
Fig. 2 is a main portion longitudinal sectional view of a power unit depicted in Fig. 1.
Fig. 3 is a development of a first plate of a cage constituting a one-way clutch depicted in Fig. 2.
Figs. 4A-4D are views showing the shape of the first plate which has been formed.
Fig. 5 is a development of a second plate of the cage.
Figs. 6A-6D are views showing the shape of the second plate which has been formed.
Fig. 7 is a front view of the one-way clutch.
Fig. 8 is a sectional view taken on a plane of the one-way clutch including the axis thereof.
Fig. 9 is a view showing the operating state of the one-way clutch, which is running idle in opposite directions.
Fig. 10 is a view showing the operating state of the one-way clutch, which is operating as a one-way clutch.

### DETAILED DESCRIPTION OF THE PREFERRED EMBODIMENTS

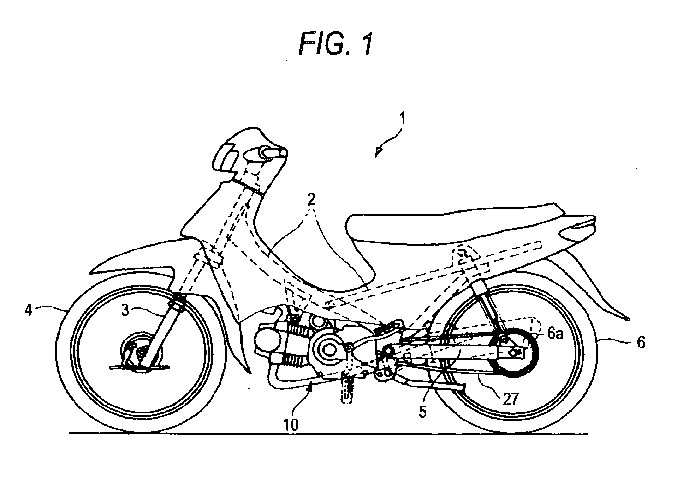

An embodiment according to the invention will be described below with reference to Figs. 1-3 and 4A-4D. First, Fig. 1 is a general side view of a motorcycle according to this embodiment.

In the motorcycle 1, a power unit 10 is suspended at the center of a body frame 2. A shaft of a front wheel 4 is supported on a front fork 3 rotatably pivoted on a front portion of the body frame 2. Further, a shaft of a rear wheel 6 is supported on the rear end of a rear fork 5 pivoted at its front end on the power unit 10 and extending backward.

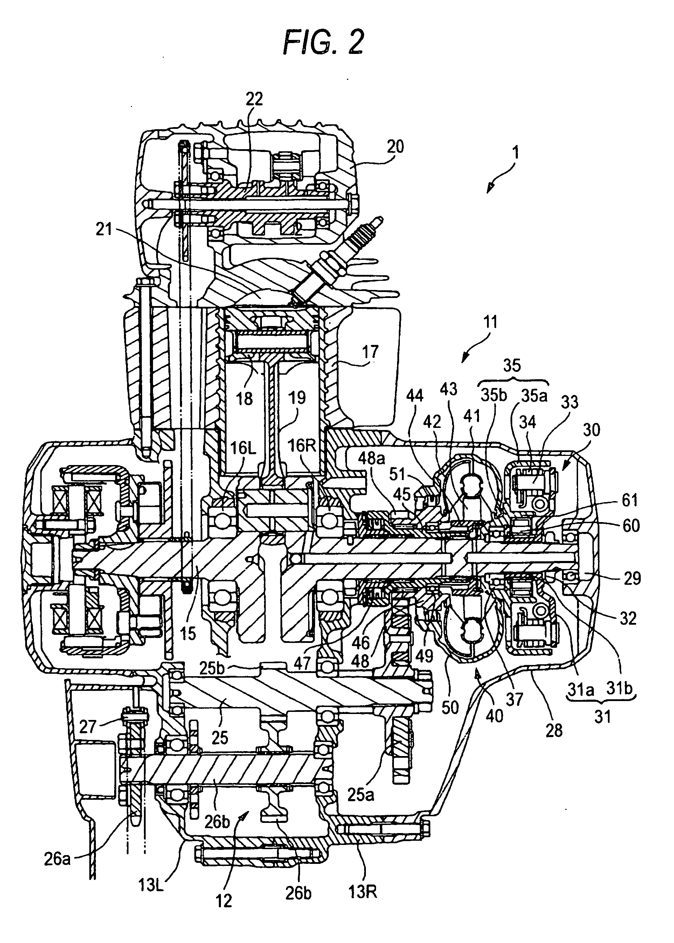

The power unit 10 is constituted by an internal combustion mechanism 11 and a load-side transmission mechanism 12 integrated with each other. Fig. 2 is a longitudinal sectional view of a main portion of the power unit 10.

A left unit casing 13L and a right unit casing 13R which are left and right half splits are combined to incorporate a crank casing of the internal combustion engine 11 and a gear casing of the transmission mechanism 12. Thus, a crank chamber and a gear chamber are formed internally.

A crankshaft 15 is supported on the left and right unit casings 13L and 13R through bearings 16L and 16R respectively, so as to be disposed to point in the left/right direction of the motorcycle. In the internal combustion engine 11, a piston 18 slidably fitted into a cylinder bore of a cylinder block 17 is connected to the crank shaft 15 through a connecting rod 19.

A cylinder head 20 joined to the cylinder block 17 forms a combustion chamber 21 between the cylinder head 20 and the top face of the piston 18. The cylinder head 20 is provided with an air intake and exhaust valve (not shown) for opening and closing an air intake and exhaust port communicating with the combustion chamber 21. A cam shaft 22 for driving the air intake and exhaust valve is rotatably supported on the cylinder head 20 and in parallel to the crankshaft 15.

In the transmission mechanism 12, an input shaft 25 and an output shaft 26 disposed in parallel with the crankshaft 15 are rotatably laid between the left and right unit casings 13L and 13R. A primary reduction driven gear 25a is fitted to an end portion of the input shaft 25 projecting rightward from the right unit casing 13R, and a driving gear 25b is formed on the left inside. A driving sprocket 26a is fitted to an end portion of the output shaft 26 projecting on the left outside of the left unit casing 13L, and a driven gear 26b is fitted on the right inside of the left unit casing 13L. The driven gear 26b and the driving gear 25b gear with each other.

A chain 27 is laid between the driving sprocket 26a projecting outside the output shaft 26 and a driven sprocket 6a (see Fig. 1) provided integrally with the rear wheel 6, so as to form a final reduction mechanism.

In a right side portion of the crankshaft 15 projecting rightward from the right unit casing 13R, a centrifugal start-up clutch 30, a torque converter 40 and a primary reduction driving gear 48a are disposed in turn from the right end toward the inside. The primary reduction driving gear 48a gears with the primary reduction driven gear 25a of the transmission mechanism 12.

The primary reduction mechanism based on the gearing between the primary reduction driving gear 48a and the primary reduction driven gear 25a, the centrifugal start-up clutch 30 and the torque converter 40 are covered, from the right side, with a right side cover 28 which is joined to the right end face of the right unit casing 13R. The right side cover 28 rotatably supports an end portion of the crankshaft 15 through a bearing 29.

The centrifugal start-up clutch 30 has a clutch inner 31 and a clutch outer 35. The clutch inner 31 is comprised of a disk-like inner plate 31a and an inner boss portion 31b for retaining the base end of the inner plate 31a. The inner boss portion 31b is spline-coupled with a right end portion of the crankshaft 15 and fixed by a clutch lock bolt 32 so as to rotate integrally with the crankshaft. In addition, on a plurality of spindles 33 provided on the outer circumferential end side of the inner plate 31a so as to project in parallel with the crankshaft 15, clutch weights 34 are pivoted to tilt desirably, respectively.

The outer plate 35a of the clutch outer 35 covers the plurality of clutch weights 34 so that the inner circumferential surface of the cylindrical portion of the outer plate 35a is opposed to the clutch weights 34. On the other hand, the outer boss portion 35b retaining the base end of the outer plate 35a is rotatably pivoted on the crankshaft 15 through a bearing 37 while being supported on the inner boss portion 31b through a one-way clutch 60.

With the rotation of the crankshaft 15, the clutch inner 31 rotates together. However, the rotational torque is not transmitted to the clutch outer 35 through the one-way clutch 60. When the rotational speed of the crankshaft 15 exceeds a predetermined value, the tilting of the clutch weights 34 increases and acts on the outer plate 35a. Thus, the clutch outer 35 is rotated due to the engagement of the centrifugal clutch 30.

The one-way clutch 60 can transmit the rotation power from the transmission mechanism 12 side (the clutch outer 35 side) to the crankshaft 15 (the clutch inner 31 side) only when the driving force transmitted from the wheel to the transmission mechanism 12 side (the clutch outer 35 side) is larger than the driving force on the inner combustion engine 11 side (the clutch inner 31 side) and the rotational speed of the inner combustion engine 11 (the crankshaft 15) is not lower than a predetermined value. The detailed structure of the one-way clutch 60 and the like will be described later.

The torque converter 40 disposed on the centrifugal start-up clutch 30 adjacently to the right unit casing 13R is constituted by a pump impeller 41 coupled integrally with the outer boss portion 35b retaining the base end of the outer plate 35a, a turbine impeller 42 opposed to the pump impeller 41, and a stator impeller 43 disposed between the impellers 41 and 42.

A stator boss portion 44 retaining the base end of the stator impeller 43 is spline-fitted to a cylindrical stator shaft 45. The stator shaft 45 is rotatably supported on the crankshaft 15 through a bearing 46, and supported on the right unit casing 13R through a free wheel clutch 47 so that the stator impeller 43 can rotate in one direction together with the stator shaft 45.

A cylindrical turbine shaft 48 retaining the base end of the turbine impeller 42 is rotatably supported on the stator shaft 45 through a bearing 49, and the primary reduction driving gear 48a is formed in a left end portion of the turbine shaft 48.

A side cover 50 covering the back surface of the turbine impeller 42 is coupled integrally with the pump impeller 41. A free wheel clutch 51 for transmitting a back-load is inserted between the side cover 50 and the turbine shaft 48.

When the rotational speed of the crankshaft 15 exceeds a predetermined speed so that the pump impeller 41 rotates together with the clutch outer 35 due to the engagement of the centrifugal start-up clutch 30, hydraulic oil in the torque converter 40 circulates to flow in turn from the outer circumferential side of the pump impeller 41 back to the inner circumferential side of the pump impeller 41 through the turbine impeller 42 and the stator impeller 43 whose rotation is regulated by the free wheel clutch 47. Thus, the rotational torque of the pump impeller 41 is transmitted to the turbine impeller 42. In such a manner, the turbine shaft 48 integrated with the turbine impeller 42, that is, the primary reduction driving gear 48a is driven to rotate.

When the rotational speed of the turbine impeller 42 increases to approach the speed of the pump impeller 41, the stator impeller 43 runs idle due to the free wheel clutch 47. Thus, the impellers 41, 42 and 43 enhance the efficiency as a fluid coupling together. In such a manner, the torque converter 40 performs an automatic transmission function.

When the back-load at the time of speed reduction is input from the transmission mechanism 12 to the turbine shaft 48 through the primary reduction mechanism, the rotational torque of the turbine shaft 48 is transmitted directly to the pump impeller 41 through the side cover 50 due to the engagement of the free wheel clutch 51. As a result, the rotation of the clutch outer boss portion 35b integrated with the pump impeller 41 is transmitted to the crankshaft 15 through the one-way clutch 60. Thus, the engine brake is applied.

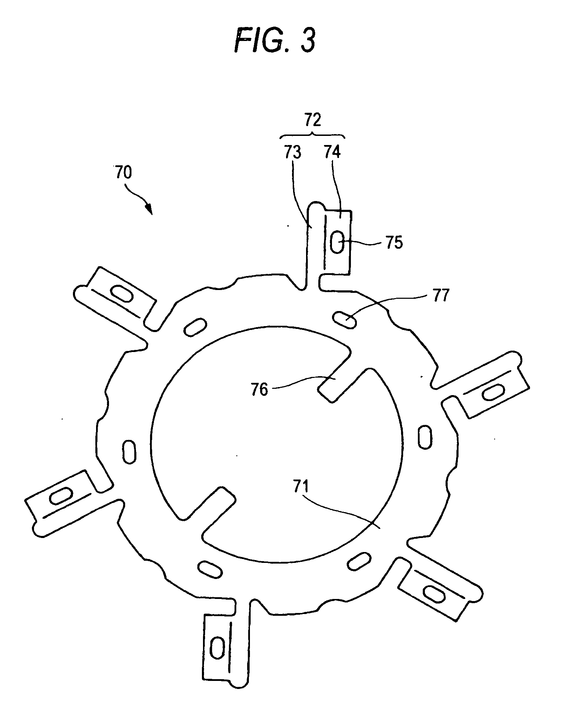

Next, the detailed structure of the one-way clutch 60 will be described with reference to Figs. 3, 4A-4D, 5, 6A-6D, and 7-10.

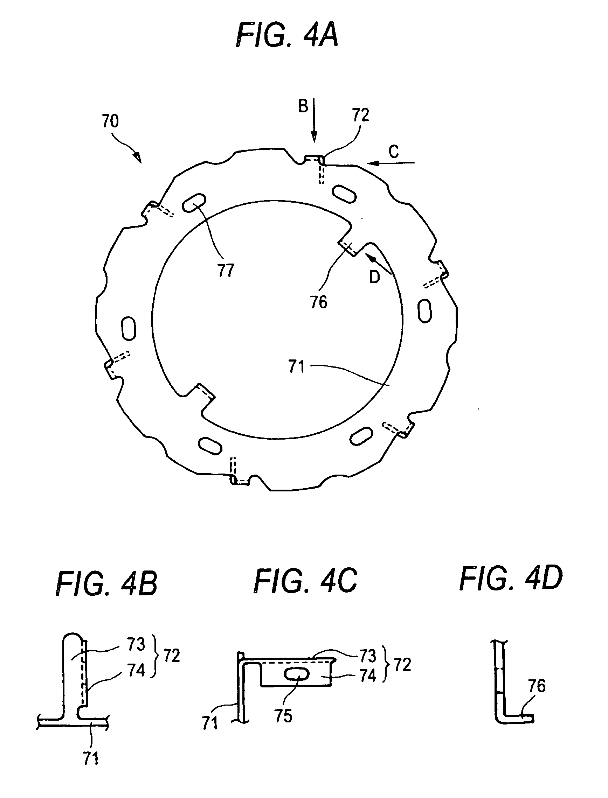

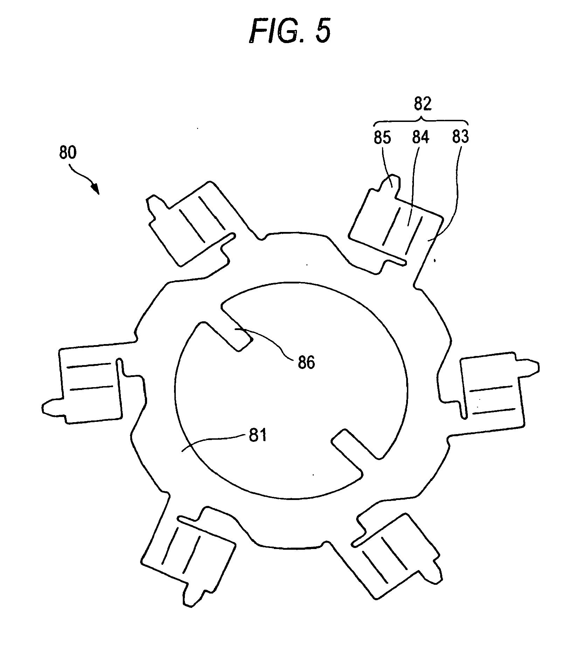

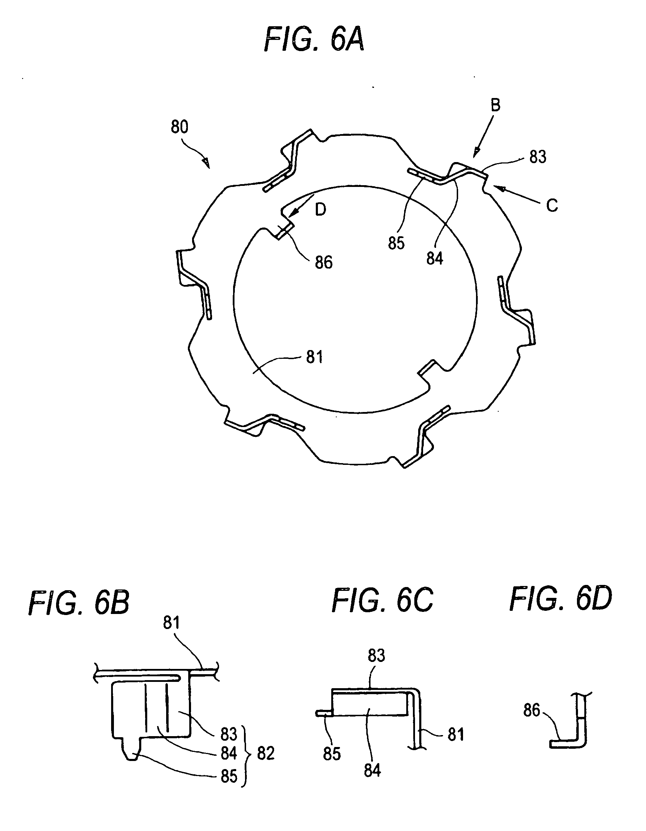

First, Fig. 3 is a development of a first plate 70 of a cage 63 constituting the one-way clutch 60, and Figs. 4A-4D are views showing the shape of the first plate 70 which has been formed. Fig. 4A is a front view, Fig. 4B is a view on arrow B of Fig. 4A, Fig. 4C is a view on arrow C of Fig. 4A, and Fig. 4D is a view on arrow D of Fig. 4A. In addition, Fig. 5 is a development of a second plate 80 of the cage 63, and Figs. 6A-6D are views showing the shape of the second plate 80 which has been formed. Fig. 6A is a front view, Fig. 6B is a view on arrow B of Fig. 6A, Fig. 6C is a view on arrow C of Fig. 6A, and Fig. 6D is a view on arrow D of Fig. 6A

In this embodiment, a plate-like steel sheet is punched to form the first plate 70 and the second plate 80.

The first plate 70 developed as shown in Fig. 3 is constituted by a substantially annular body 71, a plurality of (6 in the illustrated example) protrusion portions 72 extending from the body 71 in the outer diameter direction, and two engagement tongue portions 76 extending form the body 71 in the inner diameter direction. Each protrusion portion 72 is comprised of a first columnar portion 73 and a spring seat portion 74. A hole 75 to which an accordion spring 66 will be attached as described later is provided in the spring seat portion 74. The engagement tongue portions 76 serve to fix the cage 63 to a one-way clutch inner race 62 which will be described later. Further, the body 71 is provided with caulking holes 77 for coupling the body 71 with the second plate 80 as will be described later.

When the body 71 of the first plate 70 developed as shown in Fig. 3 is bent twice in each protrusion portion 72 and once in each engagement tongue portion 76, the three-dimensional first plate 70 as shown in Fig. 4A is formed.

Next, the second plate 80 developed as shown in Fig. 5 is constituted by a substantially annular body 81, a plurality of (6 in the illustrated example) protrusion portions 82 extending from the body 81 in the outer diameter direction, and two engagement tongue portions 86 extending form the body 81 in the inner diameter direction. Each protrusion portion 82 has a second columnar portion 83 and a caulking protrusion 85. A spindle operating surface 84 which will described later is formed between the second columnar portion 83 and the caulking protrusion 85. The engagement tongue portions 86 serve to fix the cage 63 to the one-way clutch inner race 62 which will be described later.

When the body 81 of the second plate 80 developed as shown in Fig. 5 is bent three times in each protrusion portion 82 and once in each engagement tongue portion 86, the three-dimensional second plate 80 as shown in Fig. 6A is formed.

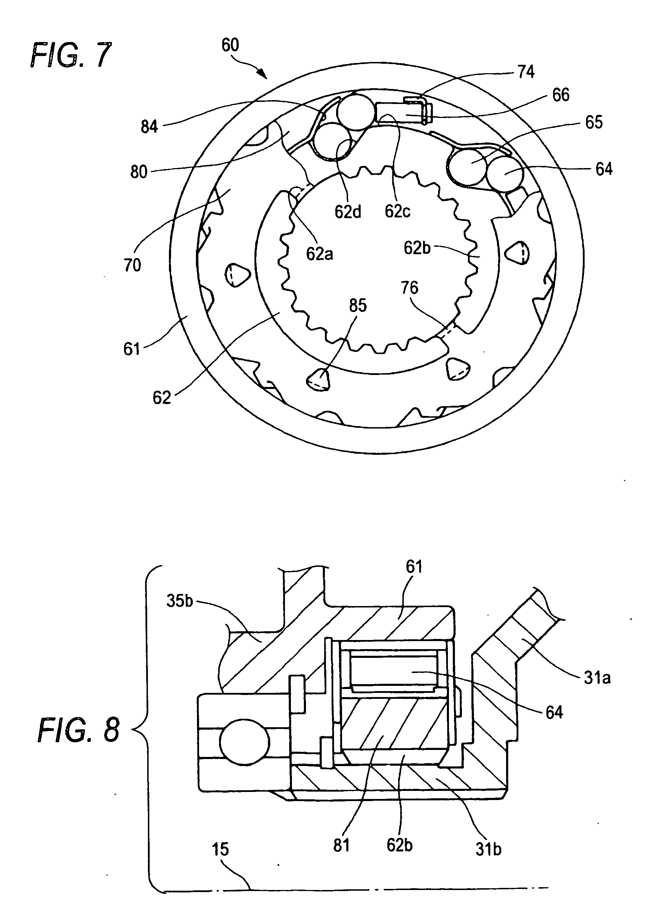

Next, Fig. 7 is a front view of the one-way clutch 60 according to the embodiment, and Fig. 8 is a sectional view taken on a plane including the axis thereof. In the one-way clutch 60 according to the embodiment, the one-way clutch inner race 62 is inserted and mated between the first and second plates 70 and 80 formed into predetermined shapes by punching a plate-like steel sheet and bending it respectively as shown in Figs. 4A-4D and 6A-6D. The caulking protrusions 85 of the second plate 80 are inserted and caulked into the caulking holes 77 of the first plate 70, while the engagement tongue portions 76 and 86 are fitted and fixed into concave grooves 62a of the one-way clutch inner race 62.

In addition to the concave grooves 62a to which the engagement tongue portions 76 and 86 of the first and second plates 70 and 80 will be fitted, the inner circumference of the one-way clutch inner race 62 has a spline 62b for coupling the one-way clutch 62 itself with the outer circumference of the inner boss portion 31b of the centrifugal start-up clutch 30. In addition, cam surfaces 62c and recess portions 62d are formed in a plurality of (6 in the illustrated example) places of the outer circumference of the one-way clutch inner race 62. Each cam surface 62c is inclined with respect to the circumference so that a clutch roller 64 canbe caught or released between the cam surface 62c and a one-way clutch outer race 61 which will be described later. Each recess portion 62d can receive a spindle 65 which will be described later likewise.

In Figs. 7 and 8, the reference numeral 61 represents a one-way clutch outer race (also see Fig. 2) formed integrally with the clutch outer boss portion 35b of the centrifugal start-up clutch 30. The inner circumference of the one-way clutch inner race 62 is spline-coupled with the outer circumference of the clutch inner boss portion 31b of the centrifugal start-up clutch 30. The outer circumference of the one-way clutch inner race 62 is disposed to secure a gap between the outer circumference of the one-way clutch inner race 62 and the inner circumference of the one-way clutch outer race 61 so that the one-way clutch inner race 62 can rotate relatively to the one-way clutch outer race 61.

A cylindrical spindle 65 is received in each recess portion 62d of the one-way clutch inner race 62d, and a clutch roller 64 is disposed outside the spindle 65. In addition, an accordion spring 66 is provided in each spring seat portion 74 so as to urge the clutch roller 64 in a non-engagement direction (counterclockwise in Fig. 7).

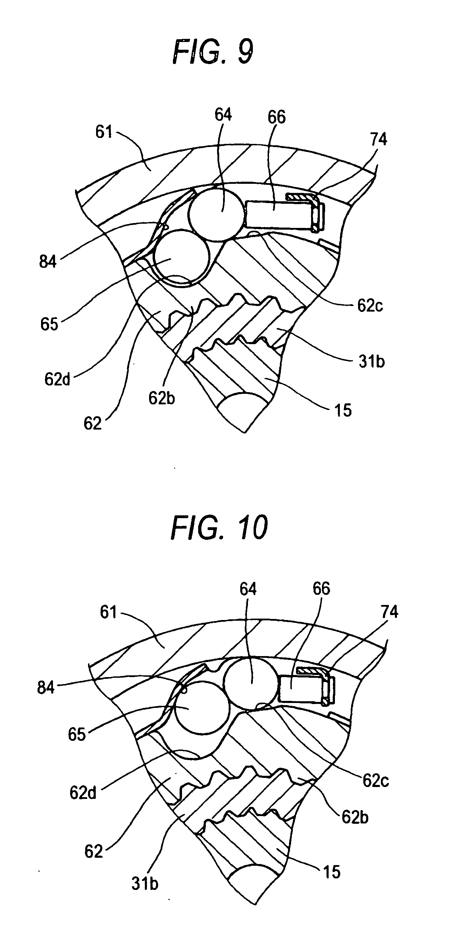

Next, Figs. 9 and 10 are views showing the operating states of the one-way clutch 60 according to the embodiment. Fig. 9 shows the state where the one-way clutch 60 is running idle in opposite directions, while Fig. 10 shows the state where the one-way clutch 60 is operating as a one-way clutch.

When the internal combustion engine 11 is stopping or rotating at a low speed, as shown in Fig. 9, each spindle 65 is located on the inner diameter side of the corresponding recess portion 62d of the one-way clutch inner race 62 so that the corresponding clutch roller 64 is pressed in the non-engagement direction by the corresponding accordion spring 66. That is, the clutch roller 64 can run idle between the one-way clutch outer race 61 and the cam surface 62c of the one-way clutch inner race 62. Thus, in the state shown in Fig. 9, even when either the one-way clutch outer race 61 or the one-way clutch inner race 62 rotates in any direction, the rotation thereof is not transmitted to the other.

Next, when the crankshaft 15 rotates in the illustrated clockwise direction, the clutch inner boss portion 31b and the one-way clutch inner race 62 rotate together. When the rotational speed reaches a predetermined value or higher, as shown in Fig. 10, the spindle 65 moves outward along the spindle operating surface 84 due to centrifugal force so as to push the clutch roller 64 against the force of the accordion spring 66 and in the engagement direction (clockwise in Fig. 10) along the cam surface 62c. Thus, the clutch roller 64 is tightly pressed and nipped between the inner circumferential surface of the one-way clutch outer race 61 and the cam surface 62c of the one-way clutch inner race 62.

When the driving force transmitted from the rear wheel 6 to the transmission mechanism 12 is larger than the driving force of the internal combustion engine 11 in this state, the clockwise rotation of the transmission mechanism 12, that is, the one-way clutch outer race 61 is transmitted directly to the one-way clutch inner race 62, that is, the crankshaft 15. On the contrary, when the driving force of the internal combustion engine 11 is larger than the driving force transmitted from the rear wheel 6 to the transmission mechanism 12, clockwise rotation of the one-way clutch inner race 62 leads the clutch roller 64 to move in the non-engagement direction between the one-way clutch outer race 61 and the cam surface 62c. Thus, the clutch roller 64 can run idle so that the rotation is not transmitted.

Description will be made along an actual drive of the motorcycle. Usually during running, the driving force of the internal combustion engine 11 is larger than the driving force transmitted from the wheel to the transmission mechanism 12. Accordingly, due to the clockwise rotation of the one-way clutch inner race 62, the clutch roller 64 moves counterclockwise, that is, in the non-engagement direction and runs idle as shown in Fig. 9. Thus, the rotation is not transmitted by the one-way clutch 60.

Next, by the operation of reduction in engine speed during running, the rotation of the wheel is transmitted to the one-way clutch outer race 61 formed in the clutch outer boss portion 35b of the centrifugal start-up clutch 30 (to rotate the one-way clutch outer race 61 in the illustrated clockwise direction). When the crankshaft 15 and the outer boss portion 35b are rotating at a predetermined rotation number or more, the spindle 65 moves outward due to centrifugal force so as to push the clutch roller 64 in the counterclockwise direction (engagement direction) along the cam surface 62c as shown in Fig. 10. Thus, the clutch roller 64 is nipped between the inner circumferential surface of the one-way clutch outer race 61 and the cam surface 62c of the one-way clutch inner race 62. As a result, the clockwise rotation of the one-way clutch outer race 61 is transmitted to the one-way clutch inner race 62, that is, the crankshaft 15 so that the engine brake is applied.

For example, when the motorcycle is taken (shoved) around with the internal combustion engine being stopped and with the wheels being rotated at a low speed, no centrifugal force acts on the spindle 65 of the one-way clutch 60. Accordingly, as shown in Fig. 9, the clutch roller 64 is pushed in the counterclockwise direction (non-engagement direction) due to the force of the accordion spring 66 so as to sink the spindle 65 into the recess portion 62d of the one-way clutch inner race 62. Thus, the clutch roller 64 runs idle so that the one-way clutch 60 can run idle in the opposite directions. In such a manner, the motorcycle can be shoved around without changing the gear into a neutral position.

In the embodiment, as described above, the rotation of the wheel is not transmitted to the crankshaft 15 even when the wheel is rotated at a low speed. It is therefore unnecessary to operate the gear when the motorcycle is taken around. On the other hand, when the accelerator is released during running, the rotation of the wheel is transmitted to the crankshaft so that the engine brake can be applied.

In the embodiment, the centrifugal force of each spindle 65 is used so that a predetermined rotation number with which the lock state of the one-way clutch can be released can be selected desirably in accordance with the weight of the spindle 65. Thus, the general-purpose properties are improved. In addition, due to operation using the centrifugal force, there occurs no loss by friction.

It can be considered that the spindle 65 is formed out of a material such as a steel product, copper, a steel alloy, aluminum, or synthetic resin. When a material having a high specific gravity, such as steel, is used, the centrifugal force applied per unit volume is increased. Thus, an interlocking state can be obtained even in a small apparatus size and at a low rotational speed, and the diameter of each spindle can be reduced.

Although the cylindrical clutch rollers 64 are shown as rolling elements in the embodiment, the rolling elements may be spherical. In addition, the spindles 65 may be not cylindrical rollers but spherical pieces. Further, as for the combination of each rolling element and each spindle, the both may be rollers, or the both may be spherical pieces. Alternatively, one of them may be a roller while the other is a spherical piece.

Although the cam surfaces 62c of the one-way clutch inner race 62 are provided circumferentially at 6 places, the number of the cam surfaces 62c can be changed desirably in accordance with a required torque capacity or the like. However, it is preferable that the cam surfaces 62c are provided circumferentially at an equal interval regardless of the number of the cum surfaces 62c.

Although the diameter of each clutch roller 64 is substantially equal to the diameter of each spindle 65 in Figs. 7, 9 and 10, it is not always necessary to make them equal to each other. The diameters may be set desirably in accordance with the use conditions (for example, a range of the rotation number during operation).

The embodiment has been described on the case where the cam surfaces 62c are formed in the outer circumference of the one-way clutch inner race 62, and the clutch rollers 64 are retained between the cam surfaces 62c and the one-way clutch outer race 61. However, the cam surfaces may be formed in the inner circumference of the one-way clutch outer race 61 so that the clutch rollers can be retained between the cam surfaces and the one-way clutch inner race 62.

## Claims

1. A motorcycle (1) comprising: an internal combustion engine (11) having a crankshaft;
a transmission mechanism (12);
a centrifugal start-up clutch (30); **characterised in that** the motorcycle (1) comprises a torque converter (40);
wherein the centrifugal start-up clutch and the torque converter (40) are provided between the crankshaft (15) and the transmission mechanism (12); and
the motorcycle further includes a one-way clutch (60) provided between the crankshaft (15) and the torque converter (40) so that the one-way clutch (60) transmits power from the transmission mechanism (12) to the crankshaft (15) only when a driving force transmitted from a wheel toward the transmission mechanism (12) is larger than a driving force of the internal combustion engine (11) and a rotational speed of the crankshaft (15) is not lower than a predetermined value.

## Patentansprüche

1. Motorrad (1), umfassend: eine Brennkraftmaschine (11), welche eine Kurbelwelle aufweist;
einen Übertragungsmechanismus (12);
eine Zentrifugalstartkupplung (30); **dadurch gekennzeichnet, dass** das Motorrad (1) einen Drehmomentwandler (40) umfasst;
wobei die Zentrifugalstartkupplung und der Drehmomentwandler (40) zwischen der Kurbelwelle (15) und dem Übertragungsmechanismus (12) vorgesehen sind; und
das Motorrad weiterhin einen Freilauf (60) aufweist, welcher zwischen der Kurbelwelle (15) und dem Drehmomentwandler (40) vorgesehen ist, so dass der Freilauf (60) eine Kraft von dem Übertragungsmechanismus (12) zu der Kurbelwelle (15) nur überträgt, wenn eine Antriebskraft, welche von einem Rad in Richtung zu dem Übertragungsmechanismus (12) übertragen wird, größer als eine Antriebskraft der Brennkraftmaschine (11) ist, und eine Drehgeschwindigkeit der Kurbelwelle (15) nicht niedriger als ein vorbestimmter Wert ist.

## Revendications

1. Motocycle (1), comprenant un moteur à combustion interne (11) muni d'un vilebrequin ;
un mécanisme de transmission (12) ;
un embrayage de démarrage (30) centrifuge ;
**caractérisé en ce que** le motocycle (1) comprend un convertisseur de couple (40) ;
dans lequel l'embrayage de démarrage centrifuge et le convertisseur de couple (40) sont prévus entre le vilebrequin (15) et le mécanisme de transmission (12) ; et
le motocycle comprend en outre un embrayage unidirectionnel (60), prévu entre le vilebrequin (15) et le convertisseur de couple (40), de manière que l'embrayage unidirectionnel (60) transmette de la puissance, du mécanisme de transmission (12) au vilebrequin (15), uniquement lorsqu'une force d'entraînement, transmise d'une roue vers le mécanisme de transmission (12), est de valeur supérieure à une force d'entraînement du moteur à combustion interne (11) et qu'une vitesse de rotation du vilebrequin (15) n'est pas inférieure à une valeur prédéterminée.
